# EUROPEAN PATENT SPECIFICATION

(11) **EP 2 404 451 B1**
(45) Date of publication and mention of the grant of the patent: **11.05.2016**
(21) Application number: 09776409.6
(22) Date of filing: 04.03.2009
(51) Int. Cl.: H04N 19/89, H04N 21/4402

(54) **PROCESSING OF MULTIMEDIA DATA**
VERARBEITUNG VON MULTIMEDIADATEN
TRAITEMENT DE DONNEES MULTIMEDIA

(43) Date of publication of application: 11.01.2012
(73) Proprietor: Telefonaktiebolaget LM Ericsson (publ), 164 83 Stockholm (SE)
(72) Inventor: RUSERT, Thomas, 164 46 Kista (SE); KAMPMANN, Markus, 52072 Aachen (DE)
(74) Representative: von Zmuda-Trzebiatowski, Margarethe
(86) International application number: PCT/EP2009/001526
(87) International publication number: WO 2010/099801

(56) References cited:
- EP-A2- 1 137 005
- WO-A1-2006/075302
- WO-A1-2008/112441
- US-A1- 2007 291 836

## Description

### Technical Field

The invention relates to techniques for processing media data on a receiver device in a packet-switched network, for example in an IP based network. The frames of the media data, in particular the frames of video data are processed before they are forwarded for presenting to the user.

The invention may be practiced with certain (TV) broadcast networks or with hybrid networks comprising a (TV) broadcast network and a mobile network, for example a DVB-H (Digital Video Broadcast-Handhelds) and a 3GPP mobile network. Basically, the invention may be practiced within any network environment in which video content may be distributed.

### Background

Multimedia streaming is a major application in the internet and for 3G networks, and a packet-switched streaming service has been standardized in 3GPP allowing to stream multimedia data like audio and video data to handhelds. In another context, streaming is used for the realization of mobile TV or IPTV services.

In case of multimedia services like Mobile TV or IPTV, data packets containing media data are streamed from a server towards a terminal device. In the terminal device, for example a mobile terminal having implemented a video client adapted for the reception of mobile TV or IPTV, typically a buffer is provided for buffering the received streaming content. This avoids pauses or gaps in the presentation of the content to the user which may otherwise occur due to delays in the delivery of the content to the terminal. Due to limited storage resources in the mobile terminal, a buffer typically has a maximum allocatable size which is sufficient to temporarily store, e.g., few seconds of a video stream.

Thus at the client upon reception of data, said data in form of packets or frames is stored in a buffer in order to compensate variations of transmission delay or transmission rate. In the next step, the packets are taken from the buffer for the play out.

Usually the media data contains of a large amount of data. In order to save network resources the media data is compressed which effectively reduce the bandwidth required to transmit thereof. Dependent of the data, like audio video, image, different compression methods are applicable.

In case of video, a video compression schema reduces the quantity of data used to represent digital video images by combining image compression and motion compensation commonly known as predictive coding techniques.

A frame in a video stream is essentially a picture captured at a predetermined instant in time, the set of frames building the video stream. In typical video coding schemes, such as an MPEG coded video stream, a GOP (Group of Pictures) is a group of successive pictures within the video stream. Each MPEG coded video stream consists of successive GOPs. A GOP can contain the following frame types:
I frame (intra-coded frame): a frame corresponding to a fixed image which is independent of other frames. Each GOP begins with this type of frame.
P frame (predictive coded frame): contains motion compensated difference information relative to previously coded frames. Normally, P frames need much less storing space than I frames.
B frame (bidirectional predictive coded frame): contains motion compensated difference information relative to previously coded frames, where bi-directional interpolated prediction can be used. Normally, B frames need less storing space than I frames or P frames.

Video data being compressed at the sender side is transmitted via a communication network and is decompressed at the receiver side before the data is forwarded for presenting.

However during the transmission often packet loss occurs with the result that not all packets belonging to a media stream are available at the client buffer. Taking the GOP example, I-picture might be decoded since they have no dependencies on previously encoded pictures. In contrast, the P-pictures can be encoded using previously encoded I or P pictures as references, consequently in case of packet loss, an error free play out of the video stream is not possible anymore.

Thus, due to the predictive coding techniques, a loss of a video packet or video frame has also influence on the quality of the succeeding video frames of the stream, so that a video decoding error is propagated throughout the stream. This error propagation stops when the next I-frame is received at the client since an I-frame is not dependent on the preceding video frames.

There are different error control mechanisms used for reconstructing errors during a transmission. Some examples are forward error correction FEC, automatic retransmission request ARQ or error concealment method.

The error concealment methods are used at the decoder to reconstruct the lost video frames. A simple concealment technique is a repetition of the last successful received video frame before the lost frame during the play out. Additionally, motion information from the neighboring video frames could be used to make a more accurate reconstruction of the missing frame, and if only parts of a video frame are lost, then correctly received neighboring blocks could be additionally utilized to help compensating for the lost parts.

However, the error concealment techniques have their limitations. Normally, it is not possible to eliminate the error introduced by the missing video frames completely. Due to error propagation, these errors are propagated throughout the decoded video sequence until the next I-frame is received and decoded. These errors could reduce the overall video quality quite heavily. For example, if a P-frame is missed at the beginning of a GOP, the error is propagated throughout the complete GOP. This results in presenting the media data to the user with degraded quality or with interruptions.

Document US 2007/0291836 discloses a method for error recovery at the receiver, including frame skipping and error concealment techniques.

### Summary

There is a demand for a technique for processing media data before presenting said media data at the receiver side. In particular there is a demand to increase the experience level of the presented quality.

The invention is embodied in independent claims. Advantageous embodiments are described in the dependent claims.

The demand is satisfied with a method for processing media data at a receiver device according to claim 1.

The abovementioned demand is also satisfied by a device for processing media data on a receiver device according to claim 14.

### Brief Description of the Drawings

In the following, the invention will further be described with reference to exemplary embodiments illustrated in the figures, in which:
- Fig. 1: is a flow diagram exemplarily illustrating an operation of the embodiment of the invention performed in the receiver device;
- Fig. 2: schematically illustrates embodiments of the present invention;
- Fig. 3: schematically illustrates an embodiment of channel switching using a interleaving approach;
- Fig. 4: schematically illustrates functional components of the receiver device in a network.

### Detailed Description of Preferred Embodiments

In the following description, for purposes of explanation and not limitation, specific details are set forth, such as particular network environments and communication standards etc., in order to provide a thorough understanding of the current invention. It will be apparent to one skilled in the art that the current invention may be practiced in other embodiments that depart from these specific details. For example, the skilled artisan will appreciate that the current invention may be practised with any wireless network like for example UMTS, GSM or LTE networks. As another example, the invention may also be implemented in short-range wireless networks such as WLAN or Bluetooth systems or in wireline networks, for example in any IP-based networks, like IMS network.

The invention may be practiced with certain (TV) broadcast networks or with hybrid networks comprising a (TV) broadcast network and a mobile network, for example a DVB-H (Digital Video Broadcast-Handhelds) and a 3GPP mobile network. Basically, the invention may be practiced within any network environment in which video content may be distributed.

The data frame might be a predictive coded frame or an independent coded frmae. The predictive coded frames are frames that cannot be decoded independently. Accordingly, the predicative coded frames may be constituted by at least one of P-frames and/or B-frames. The independent coded frames are preferably frames such as I-frames that can be decoded independently.

The media data may comprise video data, audio data, or any other kind of (multi)media data, such as, for example, a combination of video and audio data. The content may be provided within the framework of a multimedia service such as a mobile TV or IPTV service.

The packet loss may occur due to loosing a data packet during a transmission. However it may be also a result of defecting data packets, for example during the transmission between the sender and the receiver.

The threshold value describes a level of quality degradation of the media data which is acceptable by the receiver. Thus, the threshold value might be a value which describes that if a measure measuring the affected frames is below the threshold value that it might be preferred to display all frames and to reconstruct the affected predictive frames, in order to fulfill the user's experience of the presented quality. However if the measure of the determined affected frames is equal or higher than the threshold value, then it is preferably to display only the independent coded frames and to drop the predictive coded frames in order to present a slide show to the user which is experienced as a better quality then a video with interruption or pictures with bad quality. In a preferred embodiment the threshold value corresponds to a number of affected data frames.

In one preferred embodiment the GOP structure is used as an example for the realisation of the group of successive frames of the media stream. The group of successive frames of the media stream may be a sequence of data packets/frames in which the media data is subdivided. In particular the group of successive frames of the media stream comprises data frames which are predictive encoded and data frames which are independent encoded.

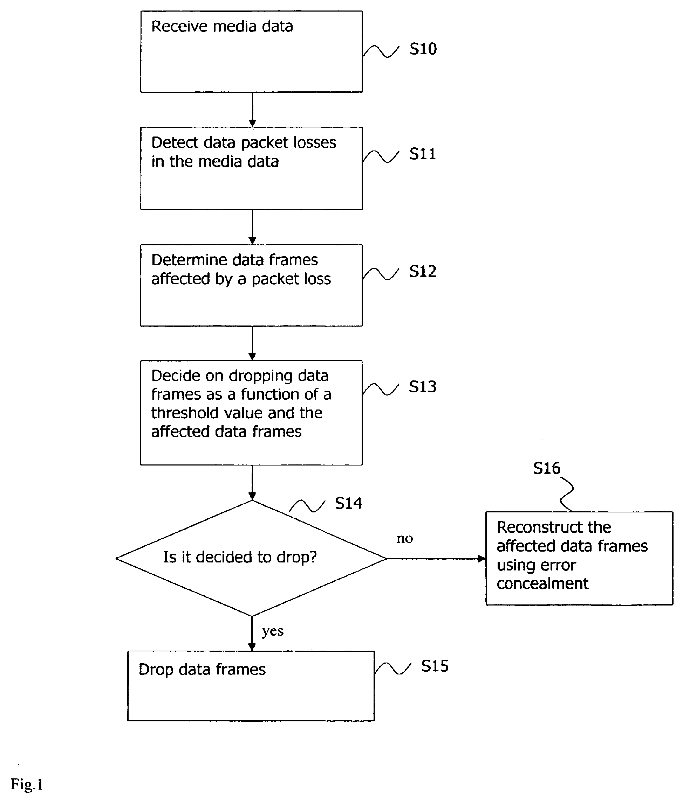

In the following an embodiment of the present invention is presented in respect to Fig. 1 showing a flow chart with steps according to the present invention.

In the first step, S10, the data to be processed is received. The receiver device may be any device receiving the media data. Thus it might be a user device providing the data for presenting to the user. Further it may be a proxy, which performs the dropping of frames. In this case the quality of media data is enhanced and additionally the amount of data which is transmitted to the next hop is reduced leading to an efficient using of network resources.

In the next step, S11, it is detected whether a packet loss occurred and whether data frames are affected by the packet loss. There are different methods applicable for determining a packet loss. One embodiment might be that a video decoder by reconstructing the stream of pictures recognizes lost data packets. A data frame may comprise at least one data packet, depending on the frame size, usually it consists of a number of data packets. Consequently, loosing one data packets or a number of data packets may lead that only one frame is affected if all of the data packets belong to said data frame.

In a further embodiment a buffer receiving and buffering data packets before forwarding them for play out may be adapted to detect loosing of data packets and to provide a corresponding report to the video decoder. Preferably the data packets and the frames are numbered for the purpose of recognizing loses. Thus, it is possible to detect looses. However, preferably the video decoder takes the decision whether a frame is affected or not.

Returning to Fig.1, in the next step, S12, the affected data frames are to be determined. There are different possible embodiments for implementing this step. In the following some preferable examples are given.

The step of determining the data frames affected by the packet may comprise assessing a number of the affected data frames. When considering the GOP structure it is proposed to count how many of data frames are affected by a packet loss.

Further the step of determining the data frames affected by the packet may comprise the step of assessing what kind of data frames is affected. For example if an independent coded frame like an I-frame is affected, than it is proposed to consider as well said I-frame as affected as also all predictive coded frame, P-frames or B-frames being dependent on this I-frame.

According to a further embodiment for realisation the step of determining it is proposed to assess a position of the data frame affected by the packet loss within a group of successive frames of the media stream. Assuming, that the affected data frames are predictive coded farmes, usually those predictive coded frames which are at the end of the group of successive frames do not influence the dropping decision since an affected predictive coded frame just before an independent coded frame does not lead to error propagation. Thus, it is proposed in this embodiment not to drop this kind of P-frames even if the number of the affected P-frames exceeds the threshold value.

In a further embodiment for realisation the step of determining it is proposed to assess the amount of intra blocks in a data frame affected by the packet loss within a group of successive frames of the media stream. Video compression typically operates on square-shaped groups of neighboring pixels, often called blocks. Within a data frame, there may be intra blocks of pixels which are coded independent of other blocks, wherein the number of such blocks influence the independent decode-ability of a data frame. In this case it is proposed that the number of intra blocks influence the decision of dropping the data frames in a way that preferably no dropping of any data frames is performed even if the number of the affected data frames exceeds the threshold value.

As a further embodiment for realisation the step of determining it is proposed determine the affected data frames based on the size of the data frame affected by the packet loss. In case of a large data packet, for example in case of a video frame encoded with a high bit rate, the loss of said data packet is rated as more severe. In case of video data a loss of a large data packet may cause a cut of a whole scene within this video frame. In this case it is proposed that the size of the affected data frames influence the dropping decision in a way that number of affected data frames is reduced or the threshold value is increased. When considering the GOP structure, this would mean that the number of affected data frames, like for example P-frames needed for deciding on dropping said frames within considered GOP is reduced.

In case of a small lost packet, like for example a video frame encoded with a lower bit rate, the loss case is rated as less severe since this may mean that no major changes of the video content has happened. In this case, the number of affected data frames within a GOP which is to be compared with the threshold value for quality degradation is increased.

Preferably the determination step based on the size of the data frame affected by the packet loss is preceded by a step of evaluating the size of the data frame affected by the packet loss. In some embodiments the size of the lost packets is not directly known at the receiver side. However, there are techniques available for determining these values at the receiver. For example, a message called RTCP (Real Time Transport Control Protocol) Sender Report (SR) sent from the server to the receiver in regular time intervals includes the number of octets or amount of data in bytes as well as the number of data packets transmitted by the server. Using this information and comparing it with the number of indeed received octets and packets allows the determination of the sizes of lost packets.

The determination of the threshold value describing the acceptance of quality degradation of the media data might be performed in any suitable and preferable way. In one embodiment it is proposed to provide this threshold value as a result of a priori performed measurements. The threshold value might be an absolute value or a percental value. It may also be a dynamic value being provide-able to the receiver during a transmission.

Now returning to Fig.1, in the next step, S13, a decision is to be taken whether to drop some data frames. In the following some embodiments for implementing this step are presented.

In a preferred embodiment for the step of deciding on dropping data frames it is proposed to compare the determined data frames affected by the packet loss with the threshold value. As described in the abovementioned embodiments the determination step has an influence on the dropping decision.

According to one embodiment of the present invention it is proposed that the data frames might be affected directly or indirectly by a packet loss. It may be that at least one packet in a data frame is deemed as lost, for example due to packet loosing or packet defecting, in this case a data frame is affected directly. In contrast thereto, it may occur that there are data frames being determined for dropping although they are not affected directly. For example when there is some dependency between these frames and the data frames being directly affected by a packet loss. In the frame of the decision step, the decision is taken which data frames are to be dropped considering the number of either directly or/and indirectly affected data frames.

According to one embodiment the number of affected data frames is compared with the threshold value. In one embodiment it is proposed that if the number of affected predictive coded frames, like for example the P-frames, is equal or above the threshold to drop all predictive coded frames located between independent coded frames, S14 and S15.

In another embodiment it is proposed to decide to drop only a set of predictive coded frames in the group of successive frames. This case may occur when for example some predictive coded frames are received correctly and the following frames in a GOP are affected by a packet loss. Herein it might be decided to play out the correctly received frames and to drop the affected frames. Preferably the decision is taken, when in the following GOP the predictive coded frames are received correctly. The dropping of the affected frames would lead to freezing the picture until playing out the next GOP.

According to a further embodiment, the step of deciding on dropping data frames S13 may comprise a step of considering predictive coded frames affected by the packet loss and located in a further group of successive frames. In this embodiment it is proposed to check also further group of successive frames, like in a preferred embodiment the neighbouring group of successive frames and to base the dropping decision on the outcome. For example when considering the GOP structure if in the neighbouring GOP all P-frames have been received correctly and in the considered GOP some P-frames are missing at the end of the GOP structure, then preferably it is to decide to not to drop the P-frames, S14, S16, even if the number of the determined P-frames is higher then the threshold value, then P-frames at the end of GOP do not propagate errors. Adequately, if the number of the affected P-frames in a neighboured GOP is high but in the considered GOP the number of affected P-frames is below the threshold value, then it may be decided to drop all P-Frames, S14, S15, in the considered GOP in order to generate a constantly slide show effect.

In a further embodiment, the step of deciding which predictive coded frames are to be dropped, S13 comprises a step of dropping predictive coded frames in a prediction hierarchy level and all other predictive coded frames depending thereon. In general, hierarchical predicted coding is one of the existing ways of coding video. Video data contains spatial and temporal redundancy. Similarities can thus be encoded by merely registering differences within a frame (intra-frame prediction) and/or between frames (inter-frame prediction). This embodiment refers to the temporal coding. In general it might be said that there are key pictures on a first layer (first temporal prediction hierarchy level) and from these key pictures, frames in a next layer (second temporal prediction hierarchy level) are predicted. Thus in case of a hierarchical prediction structure if the number of affected predicted frames of a certain temporal prediction hierarchy level exceeds a threshold, all frames of this prediction hierarchy level may be dropped, S15, as well as all other frames in the GOP that depend on those dropped frames are dropped.

In a further embodiment it is proposed to take by the dropping decision, S13, into consideration the predictive coded frames of a first layer in a scalable video coding structure and all other predictive coded frames depending thereon. Scalable media is typically ordered into hierarchical layers of data, where a video signal can be encoded into a base layer and one or more enhancement layers. A base layer can contain an individual representation of a coded media stream such as a video sequence. Enhancement layers can contain additional data relative to previous layers in the layer hierarchy. The quality of the decoded media stream improves as enhancement layers are added to the base layer. An enhancement layer enhances the temporal resolution (i.e., the frame rate), the spatial resolution (e.g. resolution of a frame), or the fidelity (quality) (e.g. by reducing noise in the frame). Each layer, together with all of its dependent layers, is one representation of the video signal at a certain spatial resolution, temporal resolution and/or quality level. Therefore, the term scalable coding structure is used herein to describe a scalable layer together with all of its dependent layers. Scalability has already been present in the video coding standards MPEG-2 Video, H.263, and MPEG-4 Visual. According to the present embodiment of a scalable video codec with a layered coding structure it is proposed that if the number of affected predictive frames of a certain layer exceeds a threshold, all frames of this layer as well as all frames of dependent layers within the certain GOP are dropped.

In step S15 in Fig. 1 it is proposed to drop the data frames being determined as affected and on which the decision has been taken to drop them.

In one embodiment it is proposed to drop the determined data frames and to show the the non-dropped frames. The presentation of some of the data frames to the users results in a presentation of a slide show. Thus instead of showing video with as badly experienced quality, a slide show of pictures is presented to the user. In one embodiment it is proposed to drop all predictive coded frames and to display the independent coded frames. Additionally or/and alternatively it may be decided to provide predictive frames for presenting. This may be the case when for example temporal prediction hierarchies are used. Assuming that for example, a number of frames corresponding to a Nth temporal prediction hierarchy level are not available, in that case it may be decided to drop the frames in hierarchy level N and hierarchy levels greater than N (i.e. frames that depend on those in level N), and to present the frames that correspond to hierarchy levels lower than N.

In step S16 in Fig.1, it is proposed not to drop any affected data packets but to try to reconstruct said data packets using any the preferably reconstructions method, like for example the error concealment method.

In the following some further embodiments of the present invention are presented.

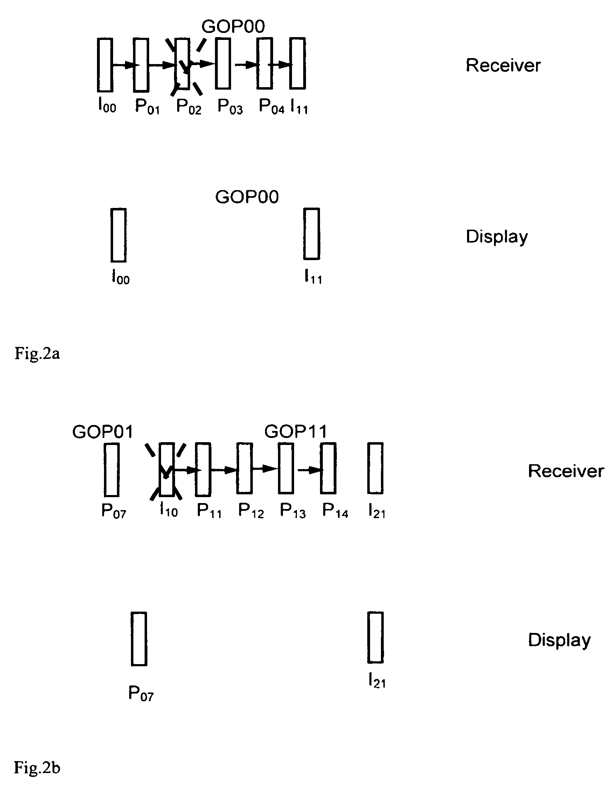

In Fig.2a, the embodiment of dropping all predictive coded frames and displaying the independent coded frames is depicted. The receiver, Receiver, receives a group of successive data frames of the media stream, GOP00, comprising the data frames, I₀₀, P₀₁, P₀₂, P₀₃, P₀₄ and I₁₁. During the determination step for determining affected data frames, it is recognised that the predictive coded frame, P₀₂ is affected. In order to avoid the propagation of the errors it is decided to drop all P-frames within this GOP and to display only the I-frames, thus the frames I₀₀ and I₁₁ are displayed, Display. The step of displaying only independent coded frames, I-frame result in a slide show presented to the user. The block artifacts in the complete GOP due to error propagation are avoided resulting in a better visual quality of the presented video stream. Thus according to this embodiment it is proposed not to display the predictive frames independent whether they have been received error free or whether they are affected by a packet loss.

In a further embodiment, presented in respect to Fig.2b, the case is shown, where an independent coded frame, I-frame I₁₀ in a a group of successive data frames, GOP11, is affected. In this case, consequently all data frames dependent on the I-frame, P₁₁ P₁₄, are also seen as affected. Herein, it is proposed to play out the last correct received P-frame, P₀₇ of the preceding received GOP, GOP01 and to drop the affected data frames. The next data frame which will be played out would be the correctly received frame of a next GOP, I₂₁. Thus, for presenting at the Display, the data frames P₀₇ and I₂₁ are provided.

In the following some examples are presented, in which the present invention may be applied.

In the so called thinning case, it is proposed to drop packets at the server if the link bandwidth is not high enough for the transmission of all packets. In particular it is proposed to drop these data packets which do not affect the video quality very much, thus for example P-frames at the end of a GOP . However, if additional packet loss occurs during the transmission the situation can change and a high video quality loss could happen. In this situation, the above described embodiments of the present invention may be used to increase the video quality. In this case it is proposed to present slide show instead of video with not acceptable quality.

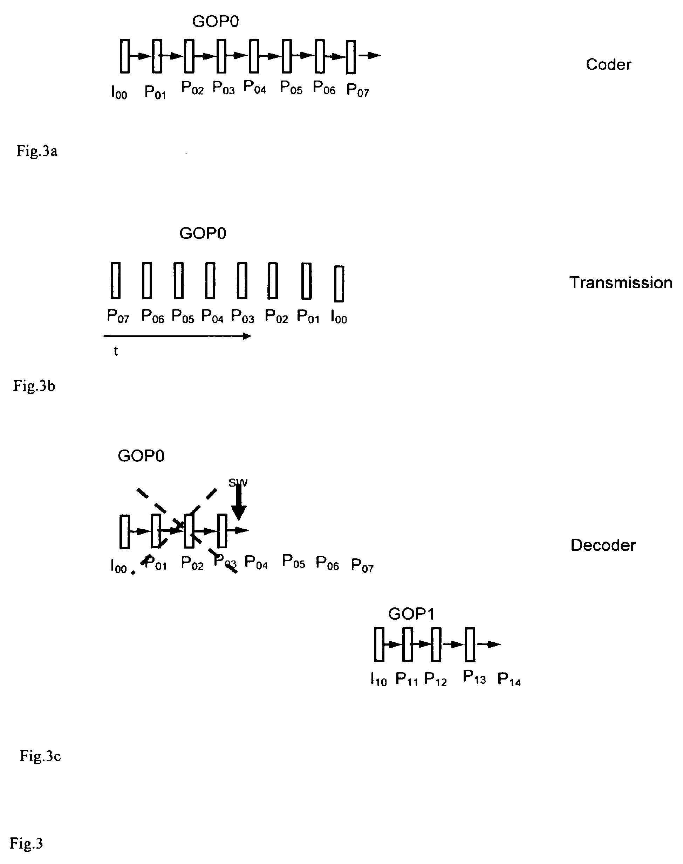

In the following a further embodiment of the present invention by implementing fast channel switching is presented in respect to Fig.3. This figure illustrates a channel switching into a new channel, wherein the channel switch happens into GOP0 at time point, sw. GOP1 is the following GOP sequence in the new channel.

Fast channel switching is a general term describing possibility to switch fast between channels, like for example TV channels. In particular the demand for providing fast channel switching is an issue in wireless communication networks, since the users expect the same switching experience as when watching TV at home.

There are different approaches realising the fast channel switching. One of the approaches is based on the interleaving in a GOP structure. As already discussed, the GOP always begins with an I-frame and afterwards several P-frames follow, in each case with some frames distance. As above mentioned the I-frames contain the full image, they do not require any additional information to reconstruct the image. Therefore any errors in the streams are corrected by the next I-frame (an error in the I-frame propagates until the next I-frame). Errors in the P-frames could propagate until the next I-frame. The more I-frames the MPEG stream has, the more it is reliable. However, increasing the number of I-frames increases the stream size.

With the interleaving, it is proposed to reorganise the video data in a manner that enables decoding and display of an independent picture by placing it at the end of a GOP while transmitting. Thus, the order of video frames within a GOP is changed during the transmission; in particular it is proposed that the I-frame appears last in a GOP.

Fig.3 presents the interleaving approach while applying a preferred embodiment. In Fig.3a , the coding step of a GOP structure GOP0 at the coder side is presented. Fig.3b depicts the sequence of frame transmission. In Fig.3c, the way of displaying the received frames is depicted.

In Fig.3a, the way of coding of GOP0 at the sender/coder side is shown. As already explained, an I-frame, I₀₀ is independent encoded and contains the whole information of a picture. The following P-frames, P₀₁ to P₀₇, are predictive encoded. The sequence of coding is that at first the I-frame is coded and then the P-frames. This is also the usual sequence of transmitting the frames. In contrast thereto, in the interleaving approach it is proposed to send at first the predictive coded frames followed by the I-frame. In Fig.3b, the interleaved transmission of the GOP structure is depicted.

Coming now to the receiver side, Fig.3c, assuming that frames P₀₁ to P₀₃ are received correctly and a channel switch is performed at the time point sw; in the interleaving case, this would mean that the I₀₀ frame and the P₀₁ to P₀₃ frames would be presented and after the channel switch, sw, a break in presenting would occur until the I₁₀ pictures of GOP1 of the new channel are taken from a buffer for play out. In order to overcome this disadvantage, it is proposed, according to the present embodiment, to drop the frames P₀₁ to P₀₃ and to present only the I₀₀ frame and as next the frame I₁₀ as slides. In respect to the embodiment of the present invention, the frames P₀₁ to P₀₃ are not directly but indirectly affected by the packet loss since the following frames P₀₄ to P₀₇ are affected in a sense that they will not be presented. The dropping of the packet is depicted with the aid of the dashed lines. Compared to the case without dropping, where a short video sequence followed by a large gap is shown, the advantage of the present embodiment is an increase of the subjective video quality.

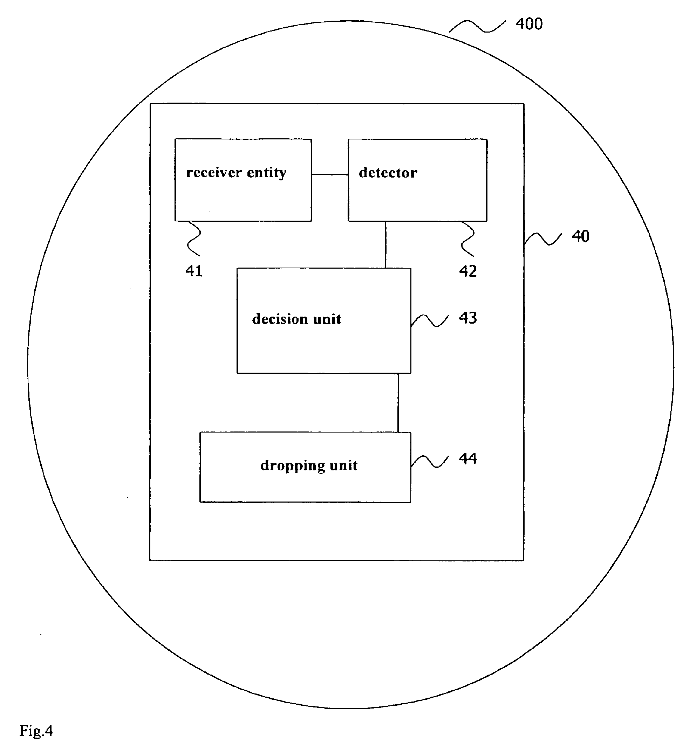

Fig. 4 schematically illustrates a packet switched network 400 with a receiver device 40. The packet switched network 400 may be an UMTS network and the receiver device 40 may be mobile devices or any proxy performing the method in the packet switched network. The receiver device either provides the end result directly to the user interface or the reduced number of packets is provided from the proxy to the link in order to reduce the amount of data of the media stream which is to be transmitted to the next hop.

According to Fig.4 the receiver device 41 has a receiver unit which is adapted to receive the media data. The media data is provided to the detector 42 which is adapted to detect a packet loss in the received data and to determine the affected data frames. In a preferred embodiment the video decoder is responsible for detecting the lost data packets. A frame may comprise at least one data packet, depending on the frame size, usually it consists of a number of data packets. Consequently, loosing one data packets or a number of data packets may lead that only one frame is affected if all of the data packets belong to said frame.

In a further embodiment a buffer receiving data packets may be adapted to detect loosing of data packets and to provide a corresponding report to the video decoder. Preferably the data packets and the frames are numbered for the purpose of recognizing loses. Thus, it is possible to detect looses. However, preferably the video decoder takes the decision whether a data frame is affected or not.

In the next step, the detector provides corresponding information to the decision unit 43 which decides whether to drop the directly or indirectly affected data frames and to display only the data frames, which are not considered as affected or to apply error concealment on the affected frames. In case the dropping decision is taken, the dropping unit 44 performs the dropping of the data frames and a provision unit, not shown in the figure, provides the non dropped data frames to the end device, which might be an end user or the next hop.

While the current invention has been described in relation to its preferred embodiments, it is to be understood that this description is for illustrative purposes only. Accordingly, it is intended that the invention be limited only by the scope of the claims appended hereto.

## Claims

1. A method for processing media data on a receiver device in a packet-switched network, the method comprising the steps of
- receiving media data (S10) comprising a sequence of data packets,
- detecting data packet losses in the media data (S11),
- determining data frames within a group of successive data frames of the media stream affected by a packet loss (S12), said determining comprising assessing a number of the affected data frames within said group of successive data frames, wherein the affected data frames comprise both the data frames being affected directly by the packet loss and the data frames being affected indirectly by the packet loss, said indirectly affected data frames being predictively encoded based on the directly affected data frames and wherein a data frame comprises at least one data packet and the group of successive data frames comprises data frames which are predictive encoded and data frames which are independent encoded,
- deciding whether to drop data frames and which data frames are to be dropped as a function of a threshold value for quality degradation of presented media data and the assessed number of data frames affected by the data packet loss (S13) and
- dropping the data frames based on the decision (S 15).

2. The method according to claim 1, wherein the step of determining comprises assessing a position of the data frame affected by the packet loss within a group of successive frames of the media stream.

3. The method according to claim 1, wherein the step of determining comprises assessing an amount of intra blocks in the data frame affected by the packet loss within a group of successive frames of the media stream.

4. The method according to claim 1, wherein the step of determining affected data frames is based on the size of the data frame affected by the packet loss.

5. The method according to claim 4, wherein the determination step based on the size of the data frame affected by the packet loss is preceded by a step of evaluating the size of the data frame affected by the packet loss.

6. The method according to one of the preceding claims 1 to 5 wherein the threshold value describes a level of quality degradation of the media data which is acceptable by the receiver device.

7. The method according to one of the preceding claims 1 to 6 wherein the step of deciding whether to drop data frames and which data frames are to be dropped comprises a step of comparing the assessed number of data frames affected by the packet loss with the threshold value.

8. The method according to claim 1, wherein the step of dropping data frames comprises a step of dropping all predictive coded frames located between independent coded frames.

9. The method according to claim 1, wherein the step of dropping data frames comprises a step of dropping a set of predictive coded frames in the group of successive frames.

10. The method according to claim 1, 8 or 9, wherein the step of deciding whether to drop data frames and which data frames are to be dropped comprises a step of considering predictive coded frames affected by the packet loss and located in a further group of successive frames.

11. The method according to claim 1, 8 or 9, wherein the step of dropping data frames comprises a step of dropping at least one independent coded frame.

12. The method according to claim 1, wherein not-dropped data frames are independent coded frames.

13. The method according to claim 1 or 12wherein the not-dropped data frames are predicted coded frames which have not been dropped.

14. A device for processing media data on a receiver device (40) in a packet-switched network, the device comprises
- receiver entity (41) for receiving media data comprising a sequence of data packets, and
- detector (42) for detecting data packet losses in the media data, and
- processor for determining data frames within a group of successive frames of the media stream affected by a packet loss, said determining comprising assessing a number of the affected data frames within said group of successive frames, wherein the affected data frames comprise both the data frames being affected directly by the packet loss and the data frames being affected indirectly by the packet loss, said indirectly affected data frames being predictively encoded based on the directly affected data frames, and wherein a data frame comprises at least one data packet and the group of successive data frames comprises data frames which are predictive encoded and data frames which are independent encoded and
- decision unit (43) for deciding whether to drop data frames and which data frames are to be dropped as a function of a threshold value for quality degradation of presented media data and the assessed number of data frames affected by the data packet loss, and
- dropping unit for dropping the data frames based on the decision.

15. A device according to claim 14, wherein further a provision unit is provided which is adapted to provide non-dropped frames for presenting on the user device.

## Patentansprüche

1. Verfahren zum Verarbeiten von Mediendaten in einer Empfängervorrichtung in einem paketvermittelten Netz, wobei das Verfahren folgende Schritte umfasst:
- Empfangen von Mediendaten (S10), die eine Abfolge von Datenpaketen umfassen,
- Detektieren von Datenpaketverlusten in den Mediendaten (S11),
- Bestimmen von Daten-Frames innerhalb einer Gruppe aufeinanderfolgender Daten-Frames des von einem Paketverlust betroffenen Medien-Streams (S12), wobei das Bestimmen das Abschätzen einer Anzahl der betroffenen Daten-Frames innerhalb der Gruppe aufeinanderfolgender Daten-Frames umfasst, wobei die betroffenen Daten-Frames sowohl die von dem Paketverlust direkt betroffenen Daten-Frames als auch die von dem Paketverlust indirekt betroffenen Daten-Frames umfassen, wobei die indirekt betroffenen Daten-Frames prädiktiv auf der Basis der direkt betroffenen Daten-Frames codiert werden, und wobei ein Daten-Frame mindestens ein Datenpaket umfasst, und die Gruppe aufeinanderfolgender Daten-Frames Daten-Frames umfasst, die prädiktiv codiert sind, und Daten-Frames umfasst, die unabhängig codiert sind,
- Entscheiden, ob Daten-Frames abzuwerfen sind und welche Daten-Frames abgeworfen werden sollen, in Abhängigkeit von einem Schwellenwert für eine Qualitätsminderung präsentierter Mediendaten und der abgeschätzten Anzahl von durch den Datenpaketverlust betroffenen Daten-Frames (S13), und
- Abwerfen der Daten-Frames auf der Basis der Entscheidung (S15).

2. Verfahren nach Anspruch 1, wobei der Schritt des Bestimmens umfasst, eine Position der von dem Paketverlust betroffenen Daten-Frames innerhalb einer Gruppe aufeinanderfolgender Frames des Medien-Streams zu beurteilen.

3. Verfahren nach Anspruch 1, wobei der Schritt des Bestimmens umfasst, eine Menge von Intra-Blöcken in den von dem Paketverlust betroffenen Daten-Frames innerhalb einer Gruppe aufeinanderfolgender Frame des Medien-Streams zu beurteilen.

4. Verfahren nach Anspruch 1, wobei der Schritt des Bestimmens betroffener Daten-Frames auf der Größe der von dem Paketverlust betroffenen Daten-Frames basiert.

5. Verfahren nach Anspruch 4, wobei dem Bestimmungsschritt auf der Basis der Größe der von dem Paketverlust betroffenen Daten-Frames ein Schritt des Beurteilens der Größe der von dem Paketverlust betroffenen Daten-Frames vorausgeht.

6. Verfahren nach einem der vorangehenden Ansprüche 1 bis 5, wobei der Schwellenwert ein Niveau der Qualitätsminderung der Mediendaten beschreibt, die von der Empfängervorrichtung toleriert werden kann.

7. Verfahren nach einem der vorangehenden Ansprüche 1 bis 6, wobei der Schritt des Entscheidens, ob Daten-Frames abzuwerfen sind und welche Daten-Frames abgeworfen werden sollen, einen Schritt des Vergleichens der abgeschätzten Anzahl der von dem Paketverlust betroffenen Daten-Frames mit dem Schwellenwert umfasst.

8. Verfahren nach Anspruch 1, wobei der Schritt des Abwerfens von Daten-Frames einen Schritt des Abwerfens allen prädiktiv codierten Frames umfasst, die sich zwischen unabhängigen codierten Frames befinden.

9. Verfahren nach Anspruch 1, wobei der Schritt des Abwerfens von Daten-Frames einen Schritt des Abwerfens eines Satzes von prädiktiv codierten Frames in der Gruppe aufeinanderfolgender Frames umfasst.

10. Verfahren nach Anspruch 1, 8 oder 9, wobei der Schritt des Entscheidens, ob Daten-Frames abzuwerfen sind und welche Daten-Frames abgeworfen werden sollen, einen Schritt des Berücksichtigens prädiktiv codierter Frames umfasst, die von dem Paketverlust betroffen sind und sich in einer weiteren Gruppe aufeinanderfolgender Frames befinden.

11. Verfahren nach Anspruch 1, 8 oder 9, wobei der Schritt des Abwerfens von Daten-Frames einen Schritt des Abwerfens mindestens eines unabhängigen codierten Frames umfasst.

12. Verfahren nach Anspruch 1, wobei nicht-abgeworfene Daten-Frames unabhängig codierte Frames sind.

13. Verfahren nach Anspruch 1 oder 12, wobei die nichtabgeworfenen Daten-Frames vorhergesagte codierte Frames sind, die nicht abgeworfen wurden.

14. Vorrichtung zum Verarbeiten von Mediendaten in einer Empfängervorrichtung (40) in einem paketvermittelten Netz, wobei die Vorrichtung Folgendes umfasst:
- eine Empfängerentität (41) zum Empfangen von Mediendaten, die eine Abfolge von Datenpaketen umfassen, und
- einen Detektor (42) zum Detektieren von Datenpaketverlusten in den Mediendaten, und
- einen Prozessor zum Bestimmen von Daten-Frames innerhalb einer Gruppe aufeinanderfolgender Frames des von einem Paketverlust betroffenen Medien-Streams, wobei das Bestimmen das Abschätzen einer Anzahl der betroffenen Daten-Frames innerhalb der Gruppe aufeinanderfolgender Frames umfasst, wobei die betroffenen Daten-Frames sowohl die von dem Paketverlust direkt betroffenen Daten-Frames als auch die von dem Paketverlust indirekt betroffenen Daten-Frames umfassen, wobei die indirekt betroffenen Daten-Frames prädiktiv auf der Basis der direkt betroffenen Daten-Frames codiert werden, und wobei ein Daten-Frame mindestens ein Datenpaket umfasst, und die Gruppe aufeinanderfolgender Daten-Frames Daten-Frames umfasst, die prädiktiv codiert sind, und Daten-Frames umfasst, die unabhängig codiert sind, und
- eine Entscheidungseinheit (43) zum Entscheiden, ob Daten-Frames abzuwerfen sind und welche Daten-Frames abgeworfen werden sollen, in Abhängigkeit von einem Schwellenwert für eine Qualitätsminderung präsentierter Mediendaten und der abgeschätzten Anzahl von durch den Datenpaketverlust betroffenen Daten-Frames, und
- eine Abwurfeinheit zum Abwerfen der Daten-Frames auf der Basis der Entscheidung.

15. Vorrichtung nach Anspruch 14, wobei des Weiteren eine Bereitstellungseinheit vorhanden ist, die dafür ausgelegt ist, nicht-abgeworfene Frames zum Präsentieren auf der Nutzervorrichtung bereitzustellen.

## Revendications

1. Procédé de traitement de données multimédias sur un dispositif récepteur dans un réseau à commutation de paquets, le procédé comprenant les étapes de :
- la réception de données multimédias (S10) comprenant une séquence de paquets de données,
- la détection de pertes de paquets de données dans les données multimédias (S11),
- la détermination de trames de données à l'intérieur d'un groupe de trames de données successives du flux multimédia affectées par une perte de paquet (S12), ladite détermination comprenant l'évaluation d'un nombre de trames de données affectées à l'intérieur dudit groupe de trames de données successives, dans lequel les trames de données affectées comprennent les trames de données qui sont directement affectées par la perte de paquet et les trames de données qui sont indirectement affectées par la perte de paquet, lesdites trames de données indirectement affectées étant codées par codage prédictif sur la base des trames de données directement affectées et dans lequel une trame de données comprend au moins un paquet de données et le groupe de trames de données successives comprend des trames de données qui sont codées par codage prédictif et des trames de données qui sont codées par codage indépendant,
- la décision s'il faut abandonner ou non des trames de données et quelles trames de données doivent être abandonnées en fonction d'une valeur de seuil de dégradation de qualité de données multimédias présentées et du nombre évalué de trames de données affectées par la perte de paquet de données (S13), et
- l'abandon des trames de données sur la base de la décision (S15).

2. Procédé selon la revendication 1, dans lequel l'étape de la détermination comprend l'évaluation d'une position de la trame de données affectée par la perte de paquet à l'intérieur d'un groupe de trames successives du flux multimédia.

3. Procédé selon la revendication 1, dans lequel l'étape de la détermination comprend l'évaluation d'une quantité d'intra blocs dans la trame de données affectée par la perte de paquet à l'intérieur d'un groupe de trames successives du flux multimédia.

4. Procédé selon la revendication 1, dans lequel l'étape de la détermination des trames de données affectées est basée sur la taille de la trame de données affectée par la perte de paquet.

5. Procédé selon la revendication 4, dans lequel l'étape de la détermination basée sur la taille de la trame de données affectée par la perte de paquet est précédée par une étape d'évaluation de la taille de la trame de données affectée par la perte de paquet.

6. Procédé selon l'une quelconque des revendications 1 à 5, dans lequel la valeur de seuil décrit un niveau de dégradation de qualité des données multimédias qui est acceptable par le dispositif récepteur.

7. Procédé selon l'une quelconque des revendications 1 à 6, dans lequel l'étape de la décision s'il faut abandonner ou non des trames de données et quelles trames de données doivent être abandonnées comprend une étape de la comparaison du nombre évalué de trames de données affectées par la perte de paquet à la valeur de seuil.

8. Procédé selon la revendication 1, dans lequel l'étape de l'abandon de trames de données comprend une étape de l'abandon de toutes les trames codées par codage prédictif situées entre des trames codées par codage indépendant.

9. Procédé selon la revendication 1, dans lequel l'étape de l'abandon de trames de données comprend une étape de l'abandon d'un ensemble de trames codées par codage prédictif dans le groupe de trames successives.

10. Procédé selon la revendication 1, 8 ou 9, dans lequel l'étape de la décision s'il faut abandonner ou non des trames de données et quelles trames de données doivent être abandonnées comprend une étape de la prise en compte de trames codées par codage prédictif affectées par la perte de paquet et situées dans un autre groupe de trames successives.

11. Procédé selon la revendication 1, 8 ou 9, dans lequel l'étape de l'abandon de trames de données comprend une étape de l'abandon d'au moins une trame codée par codage indépendant.

12. Procédé selon la revendication 1, dans lequel des trames de données qui ne sont pas abandonnées sont des trames codées par codage indépendant.

13. Procédé selon la revendication 1 ou 12, dans lequel les trames de données qui ne sont pas abandonnées sont des trames codées par codage prédictif qui n'ont pas été abandonnées.

14. Dispositif de traitement de données multimédias sur un dispositif récepteur (40) dans un réseau à commutation de paquets, le dispositif comprenant :
- une entité réceptrice (41) destinée à effectuer la réception de données multimédias comprenant une séquence de paquets de données, et
- un détecteur (42) destiné à effectuer la détection de pertes de paquets de données dans les données multimédias, et
- un processeur destiné à effectuer la détermination de trames de données à l'intérieur d'un groupe de trames successives du flux multimédia affectées par une perte de paquet, ladite détermination comprenant l'évaluation d'un nombre de trames de données affectées à l'intérieur dudit groupe de trames successives, dans lequel les trames de données affectées comprennent les trames de données qui sont directement affectées par la perte de paquet et les trames de données qui sont indirectement affectées par la perte de paquet, lesdites trames de données indirectement affectées étant codées par codage prédictif sur la base des trames de données directement affectées et dans lequel une trame de données comprend au moins un paquet de données et le groupe de trames de données successives comprend des trames de données qui sont codées par codage prédictif et des trames de données qui sont codées par codage indépendant, et
- une unité de décision (43) pour effectuer la décision s'il faut abandonner ou non des trames de données et quelles trames de données doivent être abandonnées en fonction d'une valeur de seuil de dégradation de qualité de données multimédias présentées et du nombre évalué de trames de données affectées par la perte de paquet de données, et
- une unité d'abandon pour effectuer l'abandon des trames de données sur la base de la décision.

15. Dispositif selon la revendication 14, dans lequel il est en outre prévu une unité d'approvisionnement apte à fournir des trames qui ne sont pas abandonnées en vue de leur présentation sur le dispositif d'utilisateur.
